# EUROPÄISCHE PATENTSCHRIFT

(11) **EP 0 836 373 B1**
(45) Veröffentlichungstag und Bekanntmachung des Hinweises auf die Patenterteilung: **04.04.2001**
(21) Anmeldenummer: 96924812.9
(22) Anmeldetag: 28.06.1996
(51) Int. Cl.: A01F 12/30, A01F 12/44

(54) **LANDWIRTSCHAFTLICHE ERNTEMASCHINE**
AGRICULTURAL HARVESTER
MOISSONNEUSE AGRICOLE

(30) Priorität: 01.07.1995 DE 19524040
(43) Veröffentlichungstag der Anmeldung: 22.04.1998
(73) Patentinhaber: SAME DEUTZ-FAHR S.P.A., 24047 Treviglio (Bergamo) (IT)
(72) Erfinder: VON ALLWÖRDEN, Wilhelm, D-89168 Oberstotzingen (DE); BÜERMANN, Martin, 89437 Haunsheim (DE)
(74) Vertreter: Quinterno, Giuseppe
(86) Internationale Anmeldenummer: EP9602841
(87) Internationale Veröffentlichungsnummer: WO9701951

(56) Entgegenhaltungen:
- EP-A- 0 624 310
- DE-A- 1 962 110
- DE-A- 2 438 528
- DE-A- 3 223 329
- DE-B- 1 246 307
- DE-C- 404 817
- GB-A- 1 213 985
- GB-A- 2 102 664
- US-A- 1 333 278
- US-A- 1 357 275
- US-A- 1 729 199
- US-A- 2 186 210
- US-A- 2 303 249
- US-A- 3 603 063
- DATABASE WPI Section PQ, Week 8801 Derwent Publications Ltd., London, GB; Class P12, AN 88-005354 XP002013741 & SU,A,1 311 659 (AGRIC MECHN ELECTR RES) , 23.Mai 1987
- DATABASE WPI Section PQ, Week 8705 Derwent Publications Ltd., London, GB; Class P12, AN 87-035847 XP002013742 & SU,A,1 237 114 (GORYACHKIN AGRIC ENG) , 15.Juni 1986
- DATABASE WPI Section PQ, Week 8530 Derwent Publications Ltd., London, GB; Class P12, AN 85-182575 XP002013743 & SU,A,1 132 844 (AGRIC MECHN ELECTR RES) , 7.Januar 1985

## Beschreibung

Die Erfindung betrifft eine landwirtschaftliche Erntemaschine, z.B. Mähdrescher, nach dem Oberbegriff des Anspruchs 1.

Der Mähdrescher Typ MF 760 der Firma Massey Ferguson weist die Merkmale des Oberbegriffs der Patentansprüche 1 und 9 auf.

Die Leistungsfähigkeit eines Mähdreschers wird vor allem durch die Leistungsfähigkeit seines Schüttlers begrenzt. Bei hohen Nichtkornbestandteildurchsätzen ist ein exponentieller Anstieg der Kornverluste bei der Schüttlerabscheidung zu verzeichnen. Dies ist unter anderem auf ein Verdichten der auf dem Schüttler befindlichen Nichtkornbestandteilmatte zurückzuführen. Sobald die vom Dreschwerk kommende Gutmatte auf dem Schüttler abgelegt ist, wird diese zwar durch Wurfbewegungen gefördert, eine wirkliche Auflockerung der Matte tritt aber nicht ein. Zum Teil ist sogar das Gegenteil der Fall. Bei sehr hohen Durchsätzen kommt es nach dem ersten Schüttlerdrittel zu Setzvorgängen im unteren Teil der Nichtkornbestandteilmatte. Aus diesem Grund weist der bekannte Mähdrescher sogenannte Schüttlerhilfen auf, bei denen zinkenähnliche Vorrichtungen in die auf dem Schüttler befindliche Matte eingreifen, um diese aufzulockern. Diese Schüttlerhilfen verengen jedoch den Durchgangsquerschnitt des Schüttlerhauses und neigen bei bestimmten Erntebedingungen zu Wickelerscheinungen, die zum Maschinenstillstand führen können. Aus der GB-A-2 102 664 ist eine gattungsgemäße Erntemaschine bekannt, bei der im Anschluss an die Dreschtrommel Verteileinrichtungen vorgesehen sind. Diese erstrecken sich jedoch nicht über die gesamte Breite der Dreschtrommel sondern sind lediglich im Bereich deren Enden vorgesehen. Eine optimale Verteilung wird hierdurch nicht erzielt.

Es ist deshalb Aufgabe der Erfindung, die Leistungsfähigkeit des Schüttlers eines Mähdreschers zu steigern, wobei dessen Breite den gesetzlich vorgeschriebenen Wert nicht überschreiten darf.

Die Aufgabe wird gelöst durch eine Ernte maschine mit den Merkmalen des Anspruchs 1 gelöst. Durch die Zweiteilung des Schüttlers werden Relativbewegungen der Schüttlereinheiten ermöglicht, die zu einer Auflockerung der Erntematte und zu einer intensiveren und vollständigeren Kornabscheidung führen.

Eine Weiterbildung der Erfindung besteht darin, daß jede Schüttlereinheit einen Antrieb aufweist, dessen Drehzahl, Drehsinn und Phasenlage wählbar sind. Auf diese Weise kann die Auflockerung der Erntegutmatte auf zweierlei Weise geschehen:
Läßt man die beiden Schüttler synchron mit einem Hubversatz von 180° rotieren, kommt es zu einem alternierenden Stauchen und Strecken der auf dem Schüttler befindlichen Matte, so daß eine für die Kornabscheidung vorteilhafte Auflockerung der Nichtkornbestandteilmatte erreicht wird, die auch in den unteren Schichten derselben wirkt.
Eine zweite Möglichkeit besteht darin, den zweiten Schüttler mit einer höheren Drehzahl rotieren zu lassen. Auch hier ergeben sich die zwischen den beiden Schüttlern wirkenden Stauch- und Streckvorgänge. Abhängig vom Übersetzungsverhältnis kommt es alternierend zu Phasen, in denen die Schüttler synchron laufen. Durch die höhere Drehzahl des hinteren Schüttlers ergibt sich eine Erhöhung der Transportgeschwindigkeit, so daß die Nichtkornbestandteilmatte beim Übergang auf den hinteren Schüttler entzerrt und die Kornabscheidung verbessert wird. In beiden Fällen sind die Antriebe der beiden Schüttlereinheiten gekoppelt, so daß deren Drehzahl bzw. Phasenlage konstant sind. Es sind aber auch unabhängige Antriebe mit entsprechend der Art und dem Zustand des Ernteguts getrennt regelbarer Drehzahl und Phasenlage denkbar.

Durch eine weiterführende Ausbildung der Erfindung, bei der die Schüttlereinheiten als Hordenschüttler mit mindestens je einer Stufe ausgebildet sind, wird erreicht, daß die bekannten Vorzüge dieser Schüttlerversion auch bei der neuartigen Anordnung zur Geltung kommen.

Wenn erfindungsgemäß die Schüttlereinheiten zumindest teilweise nach unten offen ausgebildet sind, wobei der im Betrieb über dem Rücklaufboden hinausragende Bereich derselben geschlossen ist, kann der Rücklaufboden platz- und kostensparend ausgebildet werden, da er um die Länge der geschlossenen Schüttlereinheit verkürzt ausgebildet werden kann.

Eine erfindungsgemäße Ausbildung, bei der die Vorbereitungsfläche als zumindest ein endloses Band ausgebildet ist. Dieses reinigt sich durch die zweifache 180°-Umlenkung an den Enden der Vorbereitungsfläche weitgehend von selbst oder kann durch einen einfachen Abstreifer auf dem Leertrum gereinigt werden. Außerdem wird der Erntegutstrom gleichmäßig zur ersten Fallstufe gefördert und bildet dort einen Erntegutschleier, der sich optimal für eine Windsichtung eignet.

Eine Weiterbildung der Erfindung besteht darin, daß parallele Zwischenwände vorgesehen sind, die entweder oberhalb des Transportbandes und dieses tangierend oder zwischen parallelen Einzelbändern und diese überragend oder als Segmente mit dem Transportband fest verbunden und mit diesem umlaufend angeordnet sind. Durch die Zwischenwände wird erreicht, daß die Erntegutverteilung auf der Vorbereitungsfläche auch bei Schräglage der Erntemaschine gleichmäßig bleibt.

Der Vorbereitungsfläche kann erfindungsgemäß eine zweite Vorbereitungsfläche nachgeordnet sein, die um die Höhe einer ersten Fallstufe gegen die Vorbereitungsfläche nach unten versetzt ist und um die Höhe einer zweiten Fallstufe oberhalb der Siebeinrichtung angeordnet ist. Durch die zwei Fallstufen wird der Erntegutstrom mittels der Gebläseluft gut vorgereinigt. Dadurch ist die Siebeinrichtung von Verunreinigung des Erntegutstroms entlastet.

Erfindungsgemäß weist die zweite Vorbereitungsfläche einen Schwingantrieb aufweist. Diese könnte auch als Transportband ausgebildet werden.

Bei einer landwirtschaftlichen Erntemaschine, insbesondere Mähdrescher, mit mindestens einer Mäheinrichtung, einer Einzugseinrichtung, einer Drescheinrichtung, einer Vorbereitungsfläche, einer Siebeinrichtung, einem Windgebläse, einem Schüttler und einem Rücklaufboden, wobei der Schüttler und der Rücklaufboden breiter als die Drescheinrichtung ausgebildet ist, weist erfindungsgemäß auch die Siebeinrichtung eine größere Breite als die Drescheinrichtung auf.

Zwar ist die Breite des Schüttlers und des Rücklaufbodens bei dem bekannten Mähdrescher gegenüber dessen Drescheinrichtung vergrößert, jedoch nur in geringem Maße und soweit, wie eine Verteilung der Nichtkornbestandteilmatte auf dem verbreiterten Schüttler ohne weitere Hilfsmittel gewährleistet ist. Demgegenüber wird bei dem erfindungsgemäßen Mähdrescher dessen zulässige Breite vollständig zur Verbreiterung des Schüttlers ausgenutzt. Die so gewonnene Leistungssteigerung des Schüttlers wird erst durch die entsprechend verbreiterte erfindungsgemäße Siebeinrichtung vervollständigt. Vollständige Ausnutzung der Breite bedeutet, daß der Schüttler, Rücklaufboden und Siebeinrichtung zuzüglich der erforderlichen Antriebselemente so breit sind, wie dies die Straßenverkehrszulassungsordnung in Deutschland bzw. Europa gestattet. Diese Breite ist im übrigen auch das Maß für den Außenabstand der Räder der vorderen Hauptantriebsachse.

Eine wichtige Weiterentwicklung der Erfindung besteht darin, daß zwischen der Drescheinrichtung und dem Schüttler eine Übergabeeinrichtung vorgesehen ist. Erst dadurch wird erreicht, daß trotz der diskontinuierlichen Verbreiterung zwischen Dreschkanal und Schüttler der Erntegutstrom gleichmäßig auf den verbreiterten Schüttler verteilt und dadurch die Verbreiterung erst wirksam wird.

Ein Vorteil ist auch, daß erfindungsgemäß die Übergabeeinrichtung als bewegtes, vorzugsweise drehendes Teil und/oder als feststehendes Teil ausgebildet ist, wobei die Übergabeeinrichtung zumindest an ihrem Abgabeende die Breite des Schüttlers aufweist.

Drehende Teile sind zwar aufwendig aber auch effizient, während feststehende Teile einfach aber meist weniger wirkungsvoll sind. Es sind auch oszillierende oder pendelnde Teile denkbar. Ebenso drehende Teile, deren Achse nicht senkrecht zum Erntegutstrom stehen sondern von der Mitte nach außen in Erntegutstromrichtung geschwenkt sind.

Eine Weiterentwicklung besteht darin, daß erfindungsgemäß das drehende und das feststehende Teil Einrichtungen zur gleichmäßigen Verteilung des Ernteguts auf den Schüttler aufweisen. Auf diese Weise wird durch Einrichtungen wie bewegliche Zinken an einer Zinkentrommel oder schräg stehende Rippen an einer Rippentrommel oder Rippen an einem Korb oder Rippen an einem feststehenden Leitblech eine gleichmäßige Verteilung des Erntegutstromes auf den Schüttler erreicht.

Durch eine Weiterbildung der Erfindung, bei der die wirksame Breite von Schüttler, Rücklaufboden, Siebeinrichtung und Leiteinrichtung einzeln oder gemeinsam im Rahmen der Fahrzeugbreite mit Blick auf maximale Ernteleistung verstellbar ist, wird große Flexibiltät und Leistung bei unterschiedlichen Erntegutarten und -zuständen erreicht. Dabei kann die geometrische Breite der Aggregate unverändert bleiben und nur deren Nutzung variabel sein.

Eine weiterführende Ausbildung der Erfindung besteht darin, daß der an sich bekannte Rücklaufboden, der unter dem Schüttler angeordnet ist, auf seiner Oberseite in seinem in Fahrtrichtung gesehen vorderen Bereich Führungseinrichtungen aufweist, die das Erntegut nach außen verteilen. Dadurch wird die verbreiterte Siebvorrichtung in ihren Außenbereichen durch den Erntegutstrom des Rücklaufbodens und in ihrem Mittenbereich durch den der zweiten Vorbereitungsfläche beaufschlagt. Auf diese Weise wird die Siebeinrichtung gleichmäßig und somit optimal genutzt.

Eine Weiterbildung der Erfindung bietet den Vorteil, daß das Windgebläse einen auf die erste Fallstufe gerichteten Strömungskanal und einen Diffusor aufweist, der auf die zweite Fallstufe und auf die Siebeinrichtung gerichtet ist, wobei der Diffusor den Wind mittels Leiteinrichtungen auf die Siebeinrichtung verteilt. Das als Querstromgebläse ausgebildete Windgebläse liefert einen gleichmäßigen Luftstrom in der Breite der Fallstufen. Durch die Leiteinrichtung werden auch die verbreiterten Bereiche der Siebeinrichtung gleichmäßig mit Wind beaufschlagt.

Eine Ausbildung der Erfindung besteht darin, daß der verbreiterte Schüttler entsprechend den Patentansprüchen 1 bis 4 ausgebildet ist. Durch die Kombination der leistungssteigernden Maßnahmen wird ein Hochleistungsschüttler geschaffen, der nicht mehr leistungsbegrenzend für den Mähdrescher ist.

Weitere Merkmale der Erfindung ergeben sich aus der folgenden Beschreibung und der Zeichnung, in der Ausführungsbeispiele der Erfindung schematisch dargestellt sind.
Es zeigen:
- Figur 1:: Querschnitt durch den Mähdrescher,
- Figur 2:: Schnitt durch eine Übergabeeinrichtung mit Rippentrommel und glattem Korb,
- Figur 3:: Ansicht der Rippentrommel,
- Figur 4:: Schnitt durch eine Übergabeeinrichtung mit Standardtrommel und Rippenkorb.
- Figur 5:: Ansicht des Rippenkorbs,
- Figur 6:: Schnitt durch eine Übergabeeinrichtung mit Zinkentrommel und glattem Korb,
- Figur 7:: Ansicht der Zinkentrommel.

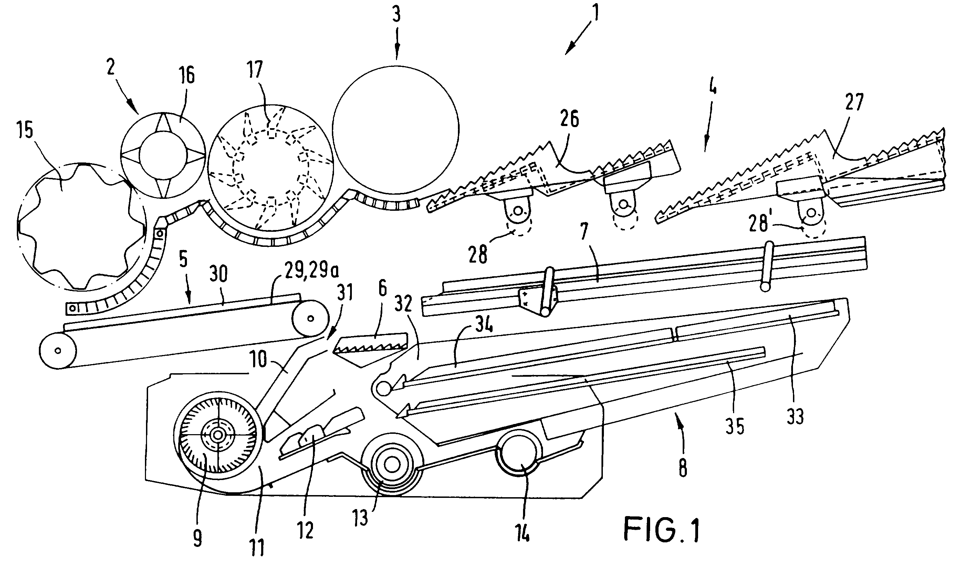

Figur 1 zeigt einen Querschnitt durch den Mähdrescher 1, mit einer Drescheinrichtung 2, einer Übergabeeinrichtung 3, einem Schüttler 4, einer Vorbereitungsfläche 5, einer zweiten Vorbereitungsfläche 6, einem Rücklaufboden 7, einer Siebeinrichtung 8, einem Windgebläse 9 mit Strömungskanal 10, Diffusor 11 und Leiteinrichtung 12, einer Körnerschnecke 13 und einer Überkehrschnecke 14.

Die Drescheinrichtung 2 weist eine Dreschtrommel 15, eine Wendetrommel 16 und einen Turboseparator 17 auf. Die Übergabeeinrichtung 3 dient zur gleichmäßigen Verteilung des Erntegutstroms auf den Schüttler, dessen Breite größer als die der Drescheinrichtung 2 ist. Die Übergabeeinrichtung 3 kann als feststehendes Teil in Gestalt eines Leitblechs ausgebildet sein, das vom Erntegutstrom beaufschlagt wird und diesen durch schräg angestellte Rippen von der Breite des Dreschkanals auf die Breite des Schüttlers expandiert.

Besonders wirkungsvoll verteilt eine Übergabeeinrichtung den Erntegutstrom, die als drehendes Teil ausgebildet ist. Dabei kommen verschiedene Ausführungen von Trommel-Korb-Kombinationen in Frage.

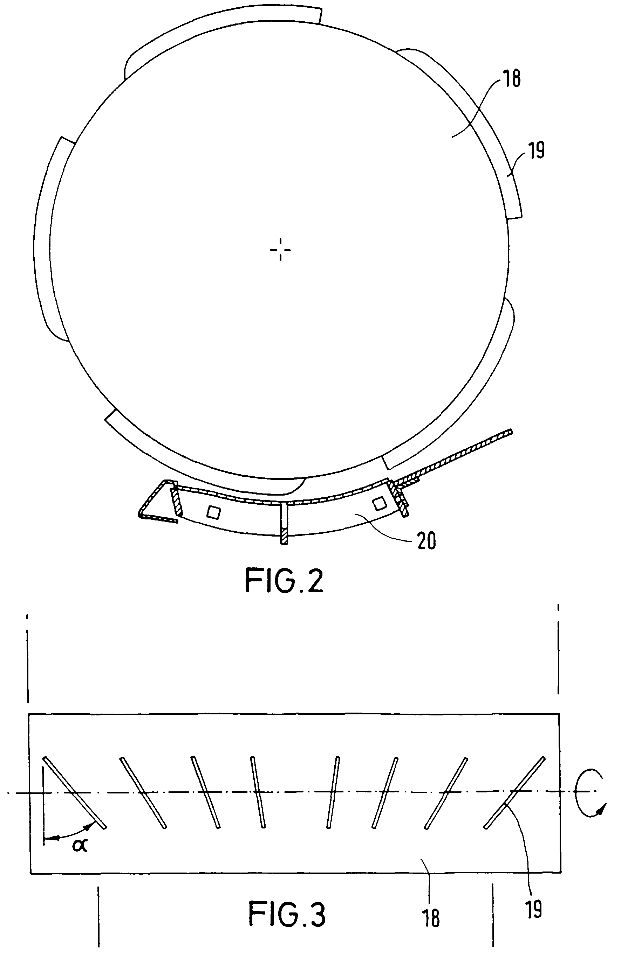

Die in Figur 2 dargestellte Rippentrommel 18 trägt an ihrem Umfang Trommelrippen 19, die gemäß Figur 3 eine zum Trommelaußenrand zunehmende Steigung aufweisen. Der unter der Rippentrommel 18 angeordnete Abscheidekorb 20 weist eine glatte Oberfläche auf. Durch die Relativgeschwindigkeit zwischen den auf der Rippentrommel 18 angebrachten Trommelrippen 19 und dem Erntegutstrom ergibt sich im Zusammenhang mit dem Anstellwinkel α der Trommelrippen 19 eine nach außen gerichtete Geschwindigkeit V_{quer}, die in Verbindung mit der Verweildauer des Ernteguts im Korbspalt dessen seitliche Verschiebung bewirkt. Der Anstellwinkel der Trommelrippen 19 wird von der Trommelmitte zu deren Außenrand immer größer, wodurch der Erntegutstrom gleichmäßig entzerrt wird. Da die erforderliche seitliche Verschiebung des Erntegutstroms von dessen Relativgeschwindigkeit zur Rippentrommel 18 und damit von deren Umfangsgeschwindigkeit abhängt, müssen die Anstellwinkel der Trommelrippen 19 verstellbar sein, um so eine Anpassung an die unterschiedlichen Trommeldrehzahlen zu ermöglichen.

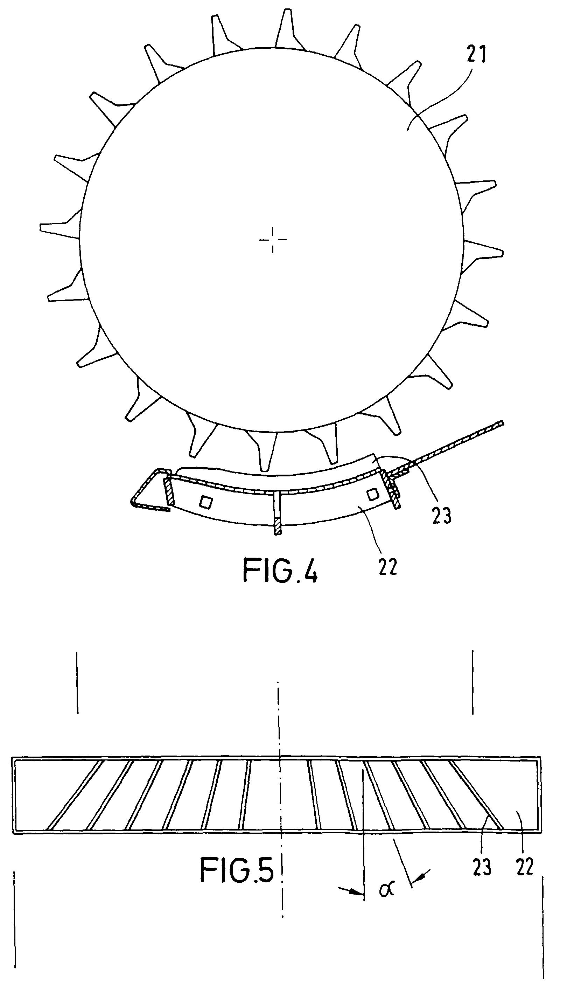

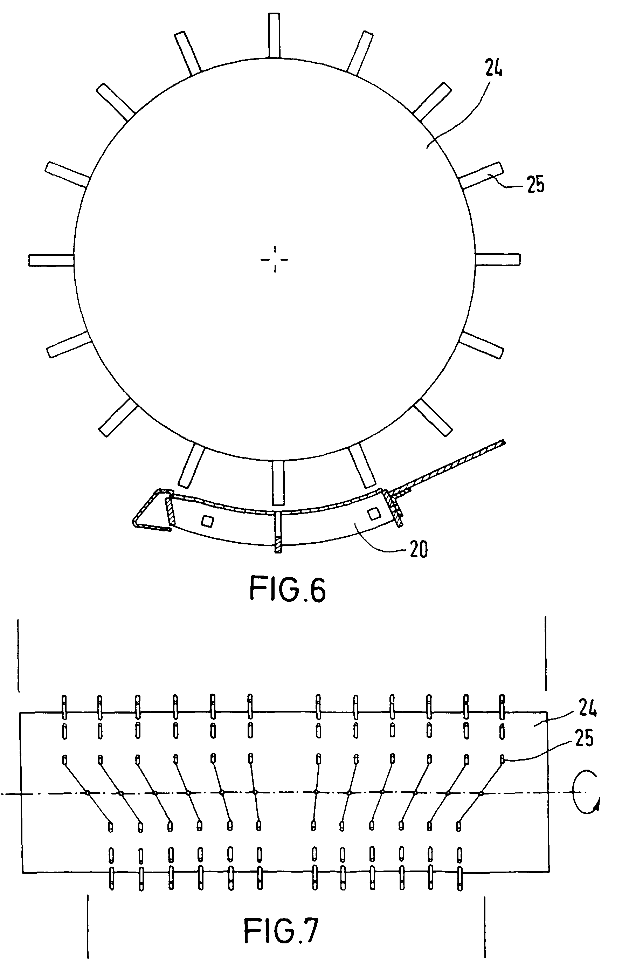

In den Figuren 4 und 5 ist eine Trommel-Korb-Kombination dargestellt, bei der die Trommel als konventionelle Abscheidetrommel 21 und der Korb als Rippenkorb 22 mit Korbrippen 23 ausgebildet ist. Um eine gleichmäßige Erntegutverteilung zu erreichen, ist auch hier der Anstellwinkel α zur Außenseite des Rippenkorbs 22 hin vergrößert. Um bei extrem trockenen Erntebedingungen eine zu hohe Strohzerstörung zu vermeiden, können diese Rippen erfindungsgemäß durch geeignete Vorrichtungen ausgeschwenkt werden.

In den Figuren 6 und 7 ist eine weitere Trommel-Korb-Kombination dargestellt, bei der die Trommel als Zinkeltrommel 24 mit gesteuerten Zinken 25 versehen ist, während der Abscheidekorb 20 glatt ausgebildet ist. Beim Durchgang durch den Korbbereich bewegen sich die Zinken 25 in definierter Weise nach außen, um so den Erntegutstrom zu entzerren. Die Zinken 25 werden durch einen geeigneten Antrieb (Taumelscheibe, Kurvenbahn o. dergl.) in Bewegung gesetzt. Um eine gleichmäßige Breitenverteilung des Erntegutstroms zu erreichen, werden die Zinken 25 so angetrieben, daß sie zur Trommelaußenseite hin größere seitliche Wege ausführen.

Der Schüttler 4 besteht gemäß Figur 1 aus einer ersten Schüttlereinheit 26 und einer zweiten Schüttlereinheit 27, die als unten offene Hordenschüttler mit je zwei Fallstufen ausgebildet sind.

Lediglich der über dem Rücklaufboden 7 hinausragende Teil der Hordenschüttler ist geschlossen. Die Schüttlereinheiten 26, 27 besitzen getrennte Antriebe 28, 28', die eine getrennte Drehrichtung, Drehzahl und Phasenlage aufweisen können. Diese gegenüber einem Standardschüttler zusätzlichen Freiheitsgrade und die vergrößerte Breite des erfindungsgemäßen Schüttlers haben dessen hohe Leistung zur Folge, die nicht mehr begrenzend für den Mähdrescher 1 ist.

Das Erntegut gelangt aus der Drescheinrichtung 2 auf eine Vorbereitungsfläche 5 von deren Breite. Diese ist als endloses Band ausgeführt, das aus mehreren parallelen Einzelbändern 29a mit dazwischen angeordneten Zwischenwänden 30 besteht. Letztere dienen, wie auch entsprechend bei den anderen Aggregaten zur gleichmäßigen Beaufschlagung der Wirkflächen bei Hangbetrieb. Die einzelnen Bänder 29a haben den Vorteil, daß sie sich durch die zweimalige Umlenkung von 180° weitgehend selbsttätig reinigen. Außerdem fließt das Erntegut in einem gleichmäßigen Strom über die erste Fallstufe 31 auf eine gleichbreite zweite Vorbereitungsfläche 6. Dabei wird es wirksam vom Wind des Windgebläses 9 gesichtet, der über einen Strömungskanal 10 auf den Erntegutstrom geblasen wird.

Die zweite Vorbereitungsfläche 6 fördert das Erntegut durch Schwingbewegungen über eine zweite Fallstufe 32 auf ein Obersieb 33 der Siebeinrichtung 8. Da die Siebeinrichtung 8 die gleiche Breite wie der Schüttler 4 aufweist, wird das Obersieb 33 von der zweiten Vorbereitungsfläche 6 nur in seinem mittleren Bereich beaufschlagt. Deshalb ist ein konventioneller schwingender Rücklaufboden 7 von der Breite des Schüttlers 4 vorgesehen, der die aus dem Schüttler 4 herabfallenden Körner in Richtung Obersieb 33 transportiert und der an seinem in Fahrtrichtung gesehen vorderen Bereich Führungseinrichtung 34 (wie z.B. Führungsrippen oder Keile) aufweist, die das Erntegut nach außen verteilen. Dadurch wird das Obersieb 33 und damit ein gleichbreites Untersieb 35 gleichmäßig mit Erntegut beschickt, wodurch sich eine optimale Erntegutverteilung ergibt. Um eine gute Erntegutverteilung auf der Siebeinrichtung zu erreichen, ist eine Abstimmung des zweiten Vorbereitungsboden 6 und der Führungseinrichtung 34 des Rücklaufbodens erforderlich. Dazu kann der zweite Vorbereitungsboden 6 Einrichtungen zur Verbreiterung des Erntegutes aufweisen oder auch die volle Breite der Siebeinrichtung 8 aufweisen. Das Windgebläse 9, das die Breite des Dreschkanals und der Vorbereitungsflächen 5, 6 aufweist, besitzt einen Diffusor 11, der den Wind mittels Leiteinrichtung 12 auf die gesamte Breite der Siebeinrichtung 8 verteilt.

Eine konventionelle Körnerschnecke 13 und eine Überkehrschnecke 14 sorgen für den Rücktransport des Ernteguts.

Ein bevorzugtes Anwendungsgebiet der Erfindung sind Mähdrescher, wobei die Erfindung jedoch nicht auf dieses Gebiet beschränkt ist, sondern auch bei weiteren Erntemaschinen (selbstfahrend oder gezogen) in einfacher Weise Anwendung findet.

## Patentansprüche

1. Landwirtschaftliche Erntemaschine, insbesondere Mähdrescher, mit mindestens einer Mäheinrichtung, einer Einzugseinrichtung, einer Drescheinrichtung (2), in einem Dreschkanal, einem Schüttler (4), einem Rücklaufboden (7), einer Vorbereitungsfläche (5, 6), einer Siebeinrichtung (8) und einem Windgebläse (9), wobei der als Hordenschüttler ausgebildete Schüttler (4) und der Rücklaufboden (7) eine größere Breite als die Drescheinrichtung (2) aufweisen und wobei die Drescheinrichtung (2) als Tangentialdreschwerk ausgebildet ist, und zwischen der Drescheinrichtung (2) und dem Schüttler (4) eine Übergabeeinrichtung (3) vorgesehen ist, die als bewegtes Teil ausgebildet ist, das zur gleichmäßigen Verteilung des Ernteguts auf den Schüttler (4) dient, dadurch gekennzeichnet, daß auch die Siebeinrichtung (8) eine größere Breite als die Drescheinrichtung (2) aufweist, und daß die Nutzbreite der Übergabeeinrichtung (3) von der Breite des Dreschkanals auf die Breite des Schüttlers (4) expandiert.

2. Landwirtschaftliche Erntemaschine nach Anspruch 1,
dadurch gekennzeichnet, daß die wirksame Breite von Schüttler (4), Rücklaufboden (7), Siebeinrichtung (8) und Leiteinrichtung (12) einzeln oder gemeinsam im Rahmen der Fahrzeugbreite mit Blick auf maximale Ernteleistung verstellbar ist.

3. Landwirtschaftliche Erntemaschine nach einem der vorhergehenden Ansprüche,
dadurch gekennzeichnet, daß der an sich bekannte Rücklaufboden (7), der unter dem Schüttler (4) angeordnet ist, auf seiner Oberseite in seinem in Fahrtrichtung gesehen vorderen Bereich Führungseinrichtungen (34) aufweist, die das Erntegut nach außen verteilen.

4. Landwirtschaftliche Erntemaschine nach einem der vorhergehenden Ansprüche,
dadurch gekennzeichnet, daß der Schüttler (4) zumindest eine erste Schüttlereinheit (26) und eine zweite Schüttlereinheit (27) aufweist, die getrennt und in Fahrtrichtung gesehen hintereinander angeordnet sind und jede Schüttlereinheit (26, 27) einen Antrieb (28, 28') aufweist, dessen Drehsinn, Drehzahl und Phasenlage wählbar sind.

5. Landwirtschaftliche Erntemaschine nach einem der vorhergehenden Ansprüche,
dadurch gekennzeichnet, daß die Schüttlereinheiten (26, 27) zumindest teilweise nach unten offen ausgebildet sind, wobei der im Betrieb über den Rücklaufboden (7) hinausragende Bereich derselben geschlossen ist.

6. Landwirtschaftliche Erntemaschine nach einem der vorhergehenden Ansprüche,
dadurch gekennzeichnet, daß die Vorbereitungsfläche (5) als zumindest ein endloses Transportband (29) ausgebildet ist.

7. Landwirtschaftliche Erntemaschine nach einem der vorhergehenden Ansprüche,
dadurch gekennzeichnet, daß parallele Zwischenwände (30) vorgesehen sind, die entweder oberhalb des Transportbandes (29) und dieses tangierend oder zwischen parallelen Einzelbändern (29a) und diese überragend oder als Segmente mit dem Transportband (29) fest verbunden und mit diesem umlaufend angeordnet sind.

8. Landwirtschaftliche Erntemaschine nach einem der vorhergehenden Ansprüche,
dadurch gekennzeichnet, daß der Vorbereitungsfläche (5) eine zweite Vorbereitungsfläche (6) nachgeordnet ist, die um die Höhe einer ersten Fallstufe (31) gegen die Vorbereitungsfläche (5) nach unten versetzt ist und um die Höhe einer zweiten Fallstufe (32) oberhalb der Siebeinrichtung (8) angeordnet ist.

9. Landwirtschaftliche Erntemaschine nach einem der vorhergehenden Ansprüche,
dadurch gekennzeichnet, daß die zweite Vorbereitungsfläche (6) einen Schwingantrieb aufweist.

10. Landwirtschaftliche Erntemaschine nach einem der vorhergehenden Ansprüche,
dadurch gekennzeichnet, daß das Windgebläse einen auf die erste Fallstufe (31) gerichteten Strömungskanal (10) und einen Diffusor (11) aufweist, der auf die zweite Fallstufe (32) und auf die Siebeinrichtung (8) gerichtet ist, wobei der Diffusor (11) den Wind mittels Leiteinrichtung (12) auch auf die verbreiteren Bereiche der Siebeinrichtung (8) verteilt.

## Claims

1. An agricultural harvester, in particular a combine, having at least one mowing device, a feed device, a threshing device (2) in a threshing conduit, a shaker (4), a run-back deck (7), a preparation surface (5, 6), a sieving device (8) and an air blast fan (9), wherein the shaker (4) constructed as a straw shaker and the run-back deck (7) have a greater width than the threshing device (2) and wherein the threshing device (2) is constructed as a tangential threshing unit, and between the threshing device (2) and the shaker (4) is provided a delivery device (3), which is constructed as a moving part which serves for the uniform distribution of the harvested product onto the shaker (4),
**characterised in that** the sieving device (8) also has a greater width than the threshing device (2),
**and in that** the useful width of the delivery device (3) expands from the width of the threshing conduit to the width of the shaker (4).

2. An agricultural harvester according to Claim 1,
**characterised in that** the effective width of shaker (4), run-back deck (7), sieving device (8) and distributing device (12) can be adjusted individually or together within the limits of the vehicle width with a view to maximum harvesting output.

3. An agricultural harvester according to one of the preceding Claims,
**characterised in that** the run-back deck (7) known per se, which is disposed beneath the shaker (4), has guide mechanisms (34), which distribute the harvested product outwards, on its upper side in its front region when viewed in the direction of travel.

4. An agricultural harvester according to one of the preceding Claims,
**characterised in that** the shaker (4) comprises at least a first shaker unit (26) and a second shaker unit (27), which are separate and are disposed one behind the other when viewed in the direction of travel and each shaker unit (26, 27) comprises a drive (28, 28') whose direction of rotation, speed and phase position can be selected.

5. An agricultural harvester according to one of the preceding Claims,
**characterised in that** the shaker units (26, 27) have a construction which is at least partly open at the bottom, wherein the region thereof that projects beyond the run-back deck (7) during operation is closed.

6. An agricultural harvester according to one of the preceding Claims,
**characterised in that** the preparation surface (5) is constructed as at least an endless conveyor belt (29).

7. An agricultural harvester according to one of the preceding Claims,
**characterised in that** parallel partitions (30) are provided, which are securely connected to the conveyor belt (29) and are disposed to revolve therewith, either above the conveyor belt (29) and touching it or between parallel individual belts (29a) and extending beyond them or as segments.

8. An agricultural harvester according to one of the preceding Claims,
**characterised in that** disposed downstream from the preparation surface (5) is a second preparation surface (6), which is downwardly offset by the height of a first gravity stage (31) towards the preparation surface (5) and is disposed by the height of a second gravity stage (32) above the sieving device (8).

9. An agricultural harvester according to one of the preceding Claims,
**characterised in that** the second preparation surface (6) has an oscillating drive.

10. An agricultural harvester according to one of the preceding Claims,
**characterised in that** the air blast fan has a flow conduit (10) directed at the first gravity stage (31) and a diffusor (11), which is directed at the second gravity stage (32) and at the sieving device (8), the diffusor (11) also distributing the blast by means of distributing device (12) to the widened regions of the sieving device (8).

## Revendications

1. Moissonneuse agricole, en particulier moissonneuse batteuse, avec au moins un dispositif moissonneur, un dispositif de rentrage, un dispositif batteur (2) dans un canal de battage, un secoueur (4), un fond de retour (7), une surface de préparation (5, 6), un dispositif de criblage (8) et une soufflerie à air (9), dans laquelle le secoueur (4) conformé en secoueur à claies et le fond de retour (7) présentent une largeur plus grande que le dispositif batteur (2) et dans lequel le dispositif batteur (2) se présente sous la forme d'un outil de battage tangentiel, et il est prévu entre le dispositif batteur (2) et le secoueur (4) un dispositif de transfert (3), qui se présente sous la forme d'une partie déplacée, qui sert à la répartition uniforme de la denrée moissonnée sur le secoueur (4), caractérisée en ce que le dispositif de criblage (8) présente également une plus grande largeur que le dispositif batteur (2) et en ce que la largeur utile du dispositif de transfert (3) s'étend de la largeur du canal de battage à la largeur du secoueur (4).

2. Moissonneuse agricole selon la revendication 1, caractérisée en ce que la largeur efficace du secoueur (4), du fond de retour (7), du dispositif de criblage (8) et du dispositif de guidage (12) peut être réglée individuellement ou conjointement dans le cadre de la largeur du véhicule en se rapportant à une capacité de moissonnage maximale.

3. Moissonneuse agricole selon l'une quelconque des revendications précédentes, caractérisée en ce que le fond de retour connu en soi (7), qui est agencé en dessous du secoueur (4), présente sur sa partie supérieure dans sa zone avant vue dans le sens de déplacement des dispositifs de guidage (4) qui répartissent la denrée moissonnée vers l'extérieur.

4. Moissonneuse agricole selon l'une quelconque des revendications précédentes, caractérisée en ce que le secoueur (4) présente au moins une première unité de secouage (26) et une seconde unité de secouage (27), qui sont séparées et sont agencées l'une derrière l'autre dans le sens de déplacement et chaque unité de secouage (26, 27) présente un entraînement (28, 28') dont le sens de rotation, la vitesse de rotation et la position de phase peuvent être sélectionnés.

5. Moissonneuse agricole selon l'une quelconque des revendications précédentes, caractérisée en ce que les unités de secouage (26, 27) sont conformées au moins en partie ouvertes vers le bas, où leur zone faisant saillie en service en dessus du fond de retour (7) est fermée.

6. Moissonneuse agricole selon l'une quelconque des revendications précédentes, caractérisée en ce que la surface de préparation (5) se présente sous la forme d'au moins une bande de transport sans fin (29).

7. Moissonneuse agricole selon l'une quelconque des revendications précédentes, caractérisée en ce qu'il est prévu des parois intermédiaires parallèles (30) qui sont reliées solidement, soit au-dessus de la bande de transport (29) et tangentiellement à celle-ci, soit entre des bandes individuelles parallèles (29a) et faisant saillie de celles-ci, soit sous la forme de segments, avec la bande de transport (29) et sont agencées de manière à tourner avec celle-ci.

8. Moissonneuse agricole selon l'une quelconque des revendications précédentes, caractérisée en ce que, derrière la surface de préparation (5), est agencée une seconde surface de préparation (6), qui est décalée vers le bas de la hauteur d'un premier gradin de chute (31) contre la surface de préparation (5) et est agencée de la hauteur d'un second gradin de chute (32) au-dessus du dispositif de criblage (8).

9. Moissonneuse agricole selon l'une quelconque des revendications précédentes, caractérisée en ce que la seconde surface de préparation (6) présente un entraînement oscillant.

10. Moissonneuse agricole selon l'une quelconque des revendications précédentes, caractérisée en ce que la soufflerie à air présente un canal d'écoulement (10) dirigé sur le premier gradin de chute (31) et un diffuseur (11), qui est dirigé sur le second gradin de chute (32) et sur le dispositif de criblage (8), le diffuseur (11) répartissant également l'air au moyen du dispositif de guidage (12) sur les zones élargies du dispositif de criblage (8).
